# EUROPEAN PATENT SPECIFICATION

(11) **EP 2 547 188 B1**
(45) Date of publication and mention of the grant of the patent: **10.02.2016**
(21) Application number: 11708344.4
(22) Date of filing: 09.03.2011
(51) Int. Cl.: A01B 69/00, A01D 78/10

(54) **HAYMAKING DEVICE**
HEUERNTEVORRICHTUNG
DISPOSITIF DE FENAISON

(30) Priority: 18.03.2010 NL 1037815
(43) Date of publication of application: 23.01.2013
(73) Proprietor: Forage Innovations B.V., 3147 PA Maassluis (NL)
(72) Inventor: ARNOLD, Martin, 38275 Steinlah (DE); HAVERMANS, Cornelis, NL-4761 WX Zevenbergen (NL)
(74) Representative: Nijs, Erik Anton Marie
(86) International application number: PCT/NL2011/000020
(87) International publication number: WO 2011/115477

(56) References cited:
- EP-A1- 1 488 679
- EP-A1- 1 658 768
- EP-A1- 1 813 142
- EP-A2- 1 013 159
- GB-A- 2 347 368

## Description

### BACKGROUND OF THE INVENTION

The invention relates to a haymaking device, such as a mower for crop, or a rake, a tedder or turning device for mown crop, wherein the crop processing tools of the device are movable in a controlled manner between an operative position in engagement with the crop and a position at a distance from the crop.

When processing a crop in haymaking, the processing device, such as a rake device, is moved over the mowing field in parallel, reciprocating work strokes. Turning the haymaking device over 180 degrees takes place on transverse strips of the mowing field, at the beginning and at the end of the area where the parallel work strokes are performed. Said transverse strips are also called headland.

For efficiency reasons, the headlands are worked in separate work strokes usually following the main direction of the headlands. Usually the headlands are first worked. The crop will be present on the mowing field for some time, scattered or in elongate windrows.

In order to prevent the crop on the headland from being engaged to an undesired extent by the tools of the haymaking device, when entering the headland at the end of a work stroke, said tools are brought into a higher position, a standby position, in which the crop is not functionally engaged. When entering again the area to be worked from the headland, the tools are brought again into the operative position.

NL patent application 95.00642 discloses a tractor which is provided with two or more mutually different tools, active behind each other and arranged behind each other, which can be raised and lowered one after another in a set chronological order. The tools can, for example, form a combination of a mower and a rake.

EP patent application 0.788.730 relates to raising and lowering tools arranged behind each other, such as rakes, in a particular chronological order, when encountering a windrow located transverse to the direction of travel.

EP patent application 1.364.573 discloses raising/lowering the front pair of rakes and the rear pair of rakes in a speed-independent order when entering/leaving the headland, respectively.

From patent application EP 1.306.000 it is known, during operation of a self-propelled mowing device having a cutter bar at its front and a cutter bar both on the left and the right side, to raise and lower the front cutter bar and the pair of lateral cutter bars one after another, when entering and leaving a headland.

Another haymaking device is known from EP 1 488 679.

The above-mentioned patent applications describe a method for not engaging a windrow near the headland of a field by raising and lowering the crop processing tools in an efficient order. A drawback of the known devices is that, in the case of a windrow which is not situated at right angles to the direction of travel, it is not possible to work the field in an optimum manner. In dependence on the angle at which the windrow is situated with respect to the direction of travel, with the known devices the crop processing tools will have to be moved to the standby position at a larger distance from the windrow, in order to prevent the windrow from being engaged. With the method as described in the above-mentioned patent applications, in the case of a field having slanting headlands, the surface of the field is not optimally utilized.

### SUMMARY OF THE INVENTION

It is an object of the invention to provide a haymaking device of the type mentioned in the preamble, which obviates said drawback, i.e. a haymaking device in which, also when entering and leaving a headland which is at an oblique angle to the working strokes, an efficient sequence of raising and lowering of the crop processing tools can be achieved.

A further object of the invention is to provide a haymaking device of the type mentioned in the preamble, by means of which, when entering and leaving a headland which is at an oblique angle to the working strokes, the raising and lowering of the crop processing tools can be optimally attuned to the angle of the transition line.

In order to achieve at least one of these objects, the invention, from one aspect, provides a haymaking device, comprising a frame movable in a direction of travel and having at least a first and a second crop processing tool, in particular a crop displacing tool, in particular a rake tool, which are arranged side to side, and first and second transfer means for transferring the first and second crop processing tools from an operative position, in which the crop is engaged for displacement thereof, to a standby position, in which the crop is not functionally engaged, and vice versa, respectively, a programmable control unit for the transfer means, wherein the first and second transfer means are capable of being activated independently of each other by the control unit, wherein the control unit is configured to process a first data indicative of an angle between a direction of travel of a work stroke of the device over the field and at least one boundary line, in particular a starting line or an end line, and wherein the control unit is configured to process a second data indicative of the speed of the device in the direction of travel, wherein the control unit is further configured to activate the first and second transfer means one after another in dependence on the first and second data upon arrival at the at least one boundary line.

As a result of the fact that the crop processing tools can be operated independently of each other in dependence on the angle of the boundary line and the speed of the device, the entire surface area of the field, and consequently the available crop, can be optimally utilized.

When approaching the boundary line which is at an oblique angle with respect to the direction of travel, the first and second crop processing tools will thus be moved, independently of each other, into or out of the operative position, which enables an optimal adaptation to the actual situation. In the case of two juxtaposed tools, the user of the device need not estimate himself when the second tool should be lowered or raised after the first tool. At an angle of 90 degrees, it will be possible for both crop processing tools to be raised/lowered simultaneously.

As a result of the fact that the user need no longer estimate himself when the crop processing tools should be raised or lowered, the risk of human failures is reduced and the efficiency of the device is thus enhanced.

In a further development of the device according to the invention, said device comprises a third processing tool, preferably of the same kind as the first and second crop processing tools, wherein the third crop processing tool is located behind the first and second crop processing tools in the direction of travel, and comprising third transfer means fir transferring the third crop processing tool from an operative position, in which the crop is engaged for processing thereof, to a standby position, in which the crop is not functionally engaged, and vice versa, wherein the first and second and third transfer means are capable of being activated independently of each other by the control unit, wherein the control unit is configured to activate the third transfer means after the first and/or second transfer means in dependence of the first and second data upon arrival of the device at the at least one boundary line.

The thus designed device according to the invention may be extended so as to comprise a fourth crop processing tool, wherein the fourth crop processing tool is located aside the third crop processing tool and is of the same kind, and comprising fourth transfer means for transferring the fourth crop processing tool from an operative position, in which the crop is engaged for processing thereof, to a standby position, in which the crop is not functionally engaged, and vice versa, wherein the first, second, third and fourth transfer means are capable of being activated independently of each other by the control unit, wherein the control unit is configured to activate the fourth transfer means after the first and/or second transfer means and before, simultaneously or after the third transfer means in dependence on the first and second data upon arrival of the device at the boundary line.

Also in the case of a plurality of crop processing tools, it holds that the risk of human failures is reduced. The control of additional crop processing tools depends on the first crop processing tool when determining the moment of raising/lowering and the sequence thereof. This interdependent control results in simple control in which a moment of raising/lowering need not be determined for each crop processing tool separately.

The crop processing tools can be rotatable about respective rotational centre lines, in particular about rotational centre lines which are substantially vertical in the operative position. The crop processing tools can in particular be designed as so-called circular rakes. The circular rakes can each be mounted in a manner known per se on their own pivot arm which, for example by means of a cylinder, can be pivoted about a substantially horizontal pivot centre line.

The rotational centre lines of the first and second crop processing tools are preferably situated substantially on a line perpendicular to the direction of travel. The rotational centre lines of the third and fourth crop processing tools are preferably situated substantially on a line perpendicular to the direction of travel.

The sequence of activating of the above-mentioned transfer means can thus be attuned to the speed of the device when approaching and crossing the boundary line.

In a further development of the device according to the invention, the control unit is provided with a memory for storage of third data indicative of a position of the crop processing tools present on the device with respect to a reference point, which point is preferably located at a fixed position on the device, wherein the control unit is configured to activate the above-mentioned transfer means also in dependence on the third data. The mutual distance between the crop processing tools, and their position on the device, can thus be taken into account, so that a better utilization of the surface to be worked is achieved.

The accuracy of the device is still further enhanced if the mutual positions of the crop processing tools is known, because the moment of raising/lowering in the case of a plurality of crop processing tools can be determined more precisely.

In a further development thereof, the device is further provided with measuring means for measuring the distance from the crop processing tools to the reference point, or a change thereof, which measuring means are in operative connection with the control unit for emitting a respective measuring signal for storage as third data.

The presence of measuring means makes it possible to determine the mutual positions of the crop processing tools at any moment, so that the device will become more flexible in use.

In a further development of the device according to the invention, the control unit is configured to process a fourth data indicative of the angle between the direction of travel of a work stroke of the device over the field and a reference line, in particular, but not necessarily, the North, wherein the control unit is configured to adjust the first data in accordance with a change of the fourth data. When the direction of travel is changed and the device approaches the boundary line at another angle, this is taken into account when activating the various transfer means, so that said activation will not occur after or before the desired point of time.

This results in that the device can compensate for any variation in the direction of travel with respect to the angle of the boundary line, so that the efficiency of the device is enhanced.

The device may be provided with an operating means to be operated by a person for making the first transfer means activated by the control unit. This makes it possible for the user of the device to determine himself the moment of starting the raising/lowering when approaching the boundary line, whereafter the control unit itself ensures the activation, in the right sequence, of the other transfer means mentioned above.

In a further development of the invention, the device is provided with a memory for storage of the first data. In this manner, the control unit has the required data continuously available, for example in the form of previously provided coordinates. This makes it possible to have the device according to the invention function automatically/semi-automatically.

The device may also be provided with detection means for obtaining the first data, which detection means can determine autonomously the angle between the boundary line and the direction of travel when approaching the boundary line. In this case, the driver need not make an estimate.

The control unit is further configured to activate the above-mentioned transfer means semi-automatically or automatically, also in dependence on the first data.

The risk of human failures is thereby further reduced. Now, the user need no longer determine himself the angle of approaching.

In the case of semi-automatic operation, a signal can be given, whereafter the driver can start the raising/lowering. In an automatic embodiment, the device can start the raising/lowering completely autonomously on the basis of the first data, without intervention of the driver.

It is pointed out that patent application WO 84/02250 shows a multiple plough, the plough shares of which are arranged in a staggered position behind each other, it being possible for the plough shares to be raised behind each other when reaching the transition line, transverse to the direction of travel, to a headland, in order to be sure that the whole surface area is still worked.

Reference is also made to patent application EP 0.807.373, which proposes, in order to avoid a zigzag-shaped transition line, to raise and lower a boom which extends obliquely rearwards and sidewards from a tractor and which is provided with a series of plough shares when reaching a transition line which is at an angle of 90 degrees to the direction of travel. In this case, the boom can be raised and lowered as a whole from the three-point hitch, but an extra tilting movement of the series of plough shares as a whole is possible with the aid of a cylinder provided at a boom end, near a support wheel, The moment when the cylinder is activated can be set by means of an adjustable control unit, in order to influence the moment when the plough shares go into or out of the soil. The raising and lowering of the boom and the tilting thereof can take place in a manner in which it also depends on the measured covered distance or the measured speed/time. As a result of the fact that the plough shares are tilted as a group, the effectiveness of each plough share is affected when the height of the boom end is changed.

The aspects and features described in this description and the claims of the application and/or shown in the figures of this application may, where possible, also be used separately from each other. These separate aspects may be the subject of divisional patent applications related thereto. This holds in particular for the features and aspects which are described per se in the dependent claims.

### BRIEF DESCRIPTION OF THE FIGURES

The invention will be explained with reference to an exemplary embodiment shown in the accompanying figures, in which:
Figure 1 shows a schematic top view of a device according to the invention;
Figure 1A is a schematic view of a control unit for the device of Figure 1;
Figure 2 is a schematic view of an operating plan for the device of Figure 1, and
Figurtes 2A-L show successive steps in the use of the device of Figure 1 in the operating plan of Figure 2.

### DETAILED DESCRIPTION OF THE FIGURES

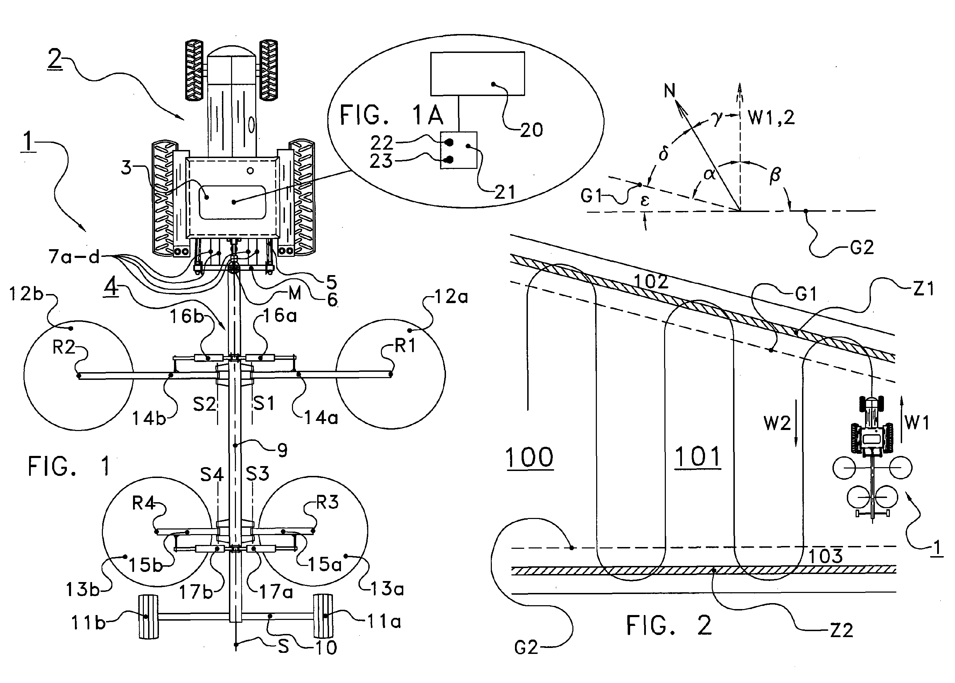

The haymaking device 1 of Figure 1 comprises a tractor 2 with a cabin 3 and a rake device 4 drawn by the tractor, which rake device 4 is mounted to a hitch 6 of the tractor 2 by means of coupling means 5.

In the cabin 3 of the tractor 2 there is provided a programmable control unit 20 with an operating/input panel 21 for the various drives in the haymaking device 1.

Drive shafts 7a, hydraulic lines 7b, electric wires 7c and data lines 7d extend from the tractor 2 to the rake device 4 for performing (having performed) different functions, such as rotating of circular rakes 12a,b, 13a,b, extending/retracting cylinders 16a,b, 17a,b, lighting and meters, and transfer of measuring data to the control unit 20.

The rake device 4 comprises a frame having a longitudinal girder 9 with longitudinal centre line S and a transverse carrier 10 with support wheels 11 a,b disposed at a rear end thereof. The rake device 4 has a marking point M, which point can serve as a reference point, as will be explained hereinafter, which reference point is located at known distances in longitudinal direction and in transverse direction from the rotor centre lines R1,2,3,4. The rake device 4 comprises four circular rakes 12a,b and 13a,b which have respective rotational centre lines R1,2,3,4 which are substantially vertical in the shown operative position. In the embodiment shown, the circular rakes 12a,b and 13a,b are identical and comprise in a manner known per se a number of substantially radially extending rake arms whose ends are provided with groups of rake tines.

The circular rakes 12a and 12b are mounted in a manner known per se on pivot arms 14a,14b, and thus pivotable about substantially horizontal centre lines S1,S2 between the shown operative position and one or more raised out-of-operation positions. For carrying out the pivotal movement, there are provided cylinders 16a,16b constituting transfer means, which cylinders can be operated by means of the control unit 20. The rotor centre lines R1 and R2 are situated on a line in a transverse plane perpendicular to the longitudinal centre line S. However, this is not necessary for the functioning of the invention, as will be explained hereinafter.

The circular rakes 13a and 13b are mounted in a manner known per se on pivot arms 15a,15b, and thus pivotable about substantially horizontal centre lines S3,S4 between the shown operative position and one or more raised out-of-operation positions. For carrying out the pivotal movement, there are provided cylinders 17a,17b constituting transfer means, which cylinders can be operated by means of the control unit 20. In the embodiment shown according to Figure 1, the pivot arms 15a,b are shorter than the pivot arms 14a,b. The rotor centre lines R3 and R4 are situated on a line in a transverse plane perpendicular to the longitudinal centre line S.

The above-mentioned out-of-operation positions comprise a transport position, in which the pivot arms are oriented substantially vertically upwards, and standby positions, in which the rake tines of the circular rakes 12a,b, 13a,b do not functionally engage the crop to be raked, lying on a mowing field, i.e. do not perform the raking function on said crop.

First data relating to the angle between the direction of travel and the boundary line which forms the transition between a main area and a headland can be input, by means of the operating panel 21, into the control unit 20 shown in more detail in Figure 1A. This can take place by inputting and confirming the value (number of degrees) of the angle in question by means of a turning knob 22 with a degree indicator.

Another way of inputting data relating to the angle or establishing the angle between the direction of travel and the boundary line is automatically detecting the angle when approaching the boundary line. This is possible by different detection methods known per se, but in particular with the aid of optical means, in particular with at least one camera.

In one embodiment, the first data can be obtained by means of a preprogrammed layout of the field to be worked stored in a memory, in which case the values of the angles are already known. This can for example take place manually or by means of a GPS device.

The distances in longitudinal direction between reference point M, for which purpose any fixed point on the device can be used, and the front sides of the circular rakes 12a,12b,13a,13b, as well as said distances in transverse direction, are input as third data beforehand - for example in the factory - into the control unit 20. If the pivot arms 14a,b, 15a,b are telescopic per se, in one embodiment, there may also be used data relating to the adjustment of the length thereof, in particular the distance from R1-4 to the longitudinal centre line S. For this purpose, sensors can be mounted on the pivot arms as length meters that supply data to the control unit 20.

In a further development, the device 1 is provided with means for measuring a second data indicative of the speed of a point of the device in the direction of travel. Said measuring means are connected to the control unit 20 for emitting a respective measuring signal.

The control unit 20 also receives a data from a velocity meter of the tractor 2. In addition, the control unit 20 is preferably provided with a GPS receiver.

In the embodiment as shown in Figure 1, rotor centre lines R1 and R2 are situated on a line in a transverse plane perpendicular to the longitudinal centre line S, like the rotor centre lines R3 and R4, but other mutual positions of the rotor centre lines with respect to each other and/or the device 1 are possible as well. The rotor centre lines R1 and R2 need, for example, not be situated on the same line in a transverse plane perpendicular to the longitudinal centre line S, but can each be situated on an individual line. The same also holds for rotor centre lines R3 and R4.

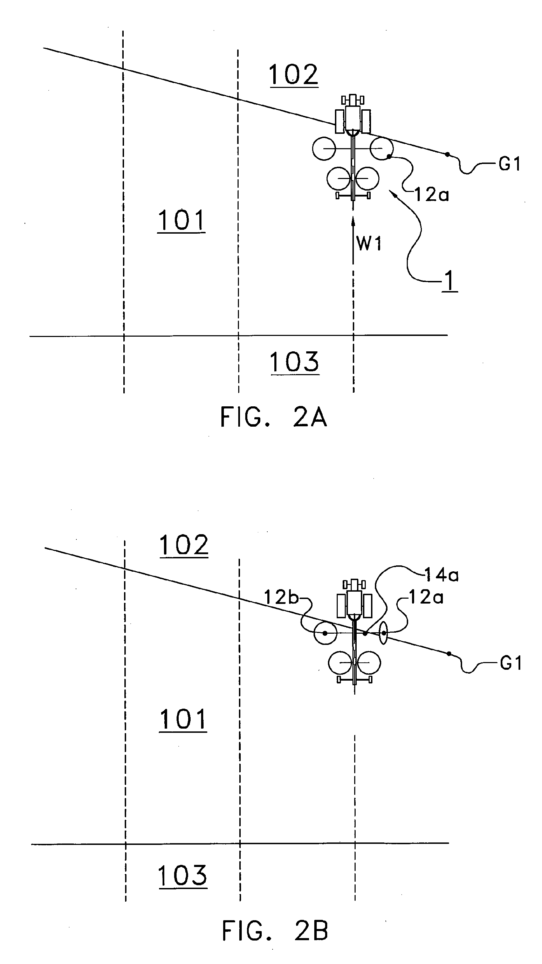

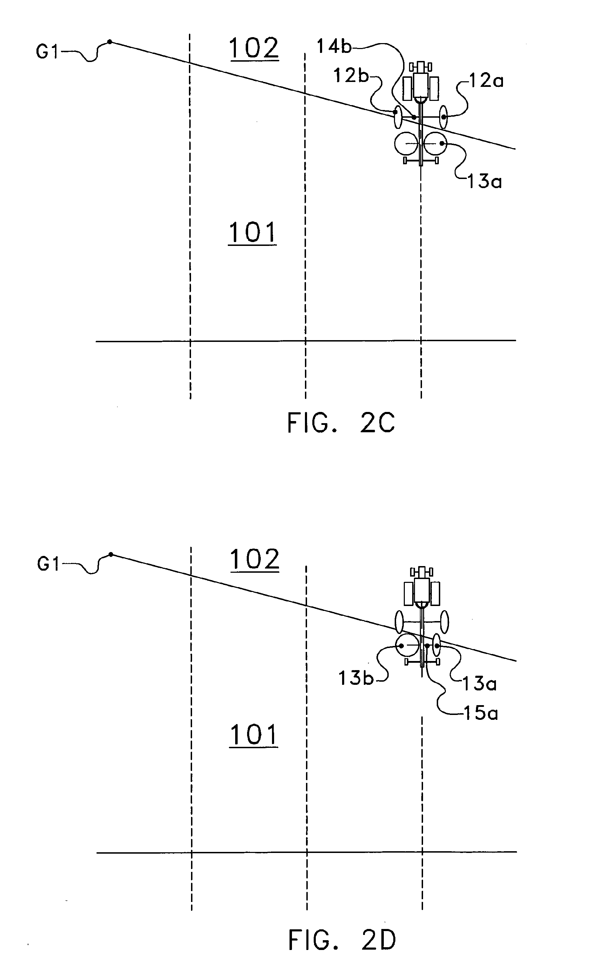

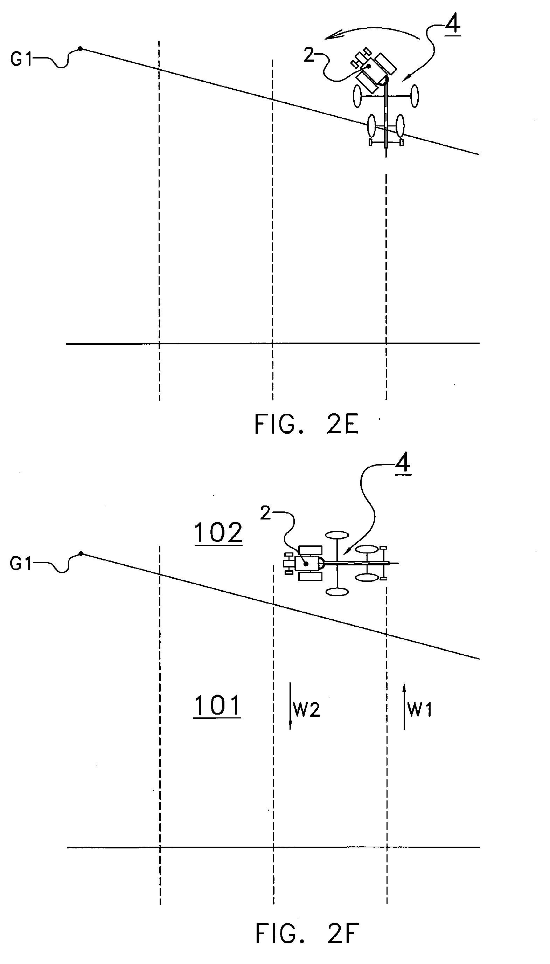

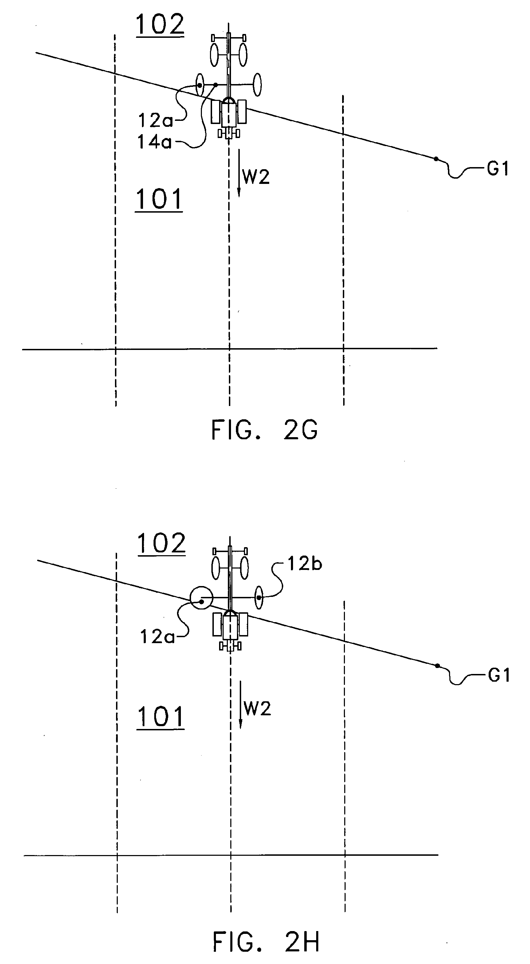

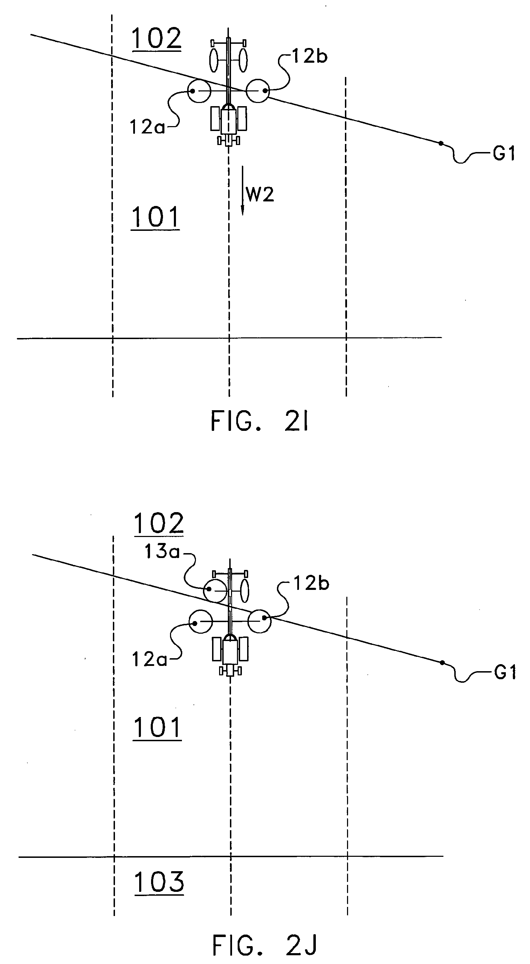

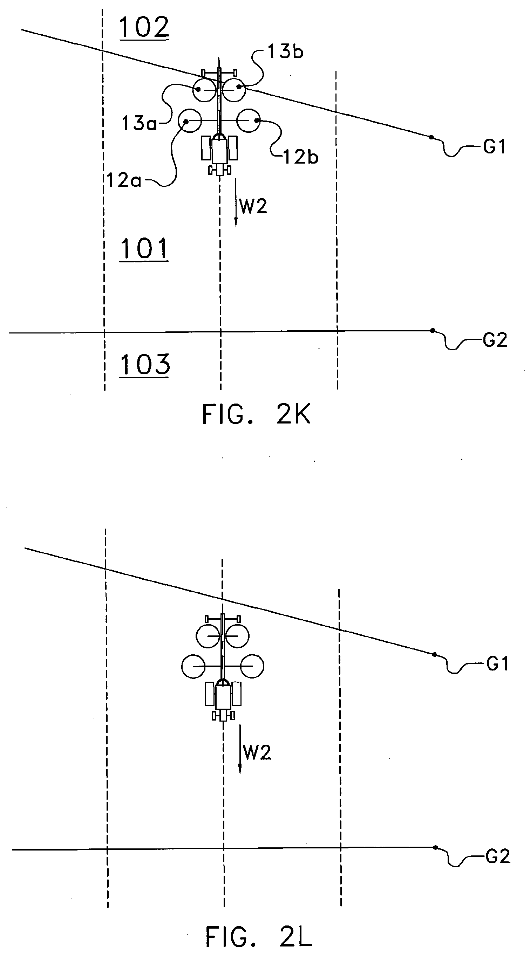

Figure 2 shows a field 100 to be worked with the haymaking device 1. The grass on this field has already been mown and lies loosely scattered on the ground. By means of the device 1 the crop lying scattered on the ground has to be raked in a manner known per se to form elongate windrows. For this purpose, the field 100 is divided into a central main area 101, where the device 1 can perform parallel work strokes, and two headlands 102 and 103, where the device 1 can turn.

For reasons to be mentioned below, the North direction, the direction of the work strokes W1,2, the boundary line G1 between the main area 101 and the headland 102 and the boundary line G2 between the main area 101 and the headland 103 are indicated. In this example, the angle gamma (γ) between North direction and W1,2 amounts to 30 degrees, the angle delta (δ) between G1 and the North direction amounts to 45 degrees and the angle epsilon (ε) between G1 and G2 amounts to 15 degrees. The angle alpha (α) between W1/W2 and G1 is then 75 degrees and the angle beta (β) between W1/W2 and G2 is 90 degrees (in this example). W1,2 and G2 can also be at another angle with respect to each other.

The headlands 102,103 have been worked before the main area 101 is worked. Windrows Z1 and Z2 have already been formed there, which windrows may, if desired, also be located somewhat closer to the boundary line G1,G2. When turning on the headlands 102 and 103, the device 1 will cross the windrows Z1,2, for which reason it is desirable to bring the circular rakes of said device into the standby position during said turning, so that the windrows Z1 and Z2 will not be engaged. Moreover, keeping the rake tines in functional contact with an already raked surface would be waste of power. For an effective operation it is desirable that, when entering again the main area 101, the circular rakes are again functional at the right moment, at the right place, so that a largest possible quantity of crop is taken along by the circular rakes.

In a simple embodiment, the driver estimates the magnitude of the angle alpha between W1 and G1. He sets this value by means of the turning knob 22. This value is stored in the control unit as the angular value for alpha, as a first data for G1. The same takes places for the boundary line G2, in which case the angular value for beta between W2 and G2 is stored as a first data for G2. These estimates can be made by the driver beforehand, at the end of the operations on the headlands, the direction W1,2 being already known, or in a pre-stroke in the main area.

In a further embodiment, the angle alpha, for example between W1 and G1, is automatically detected when approaching the boundary line. This can take place by detection means know per se, in particular optical detection means, in particular a camera, in particular a 3D camera. This camera is, for example, mounted on the tractor and detects a windrow Z1. The data from the detection means, preferably the camera, are processed, in which case the angle between Z1 and the direction of travel W1, which angle equals the angle between G1 and the direction of travel W1, is calculated on the basis of the image obtained.

Starting of the raising/lowering can take place automatically, in which case the control unit determines itself when the raising/lowering begins, and semi-automatically, in which case the control unit sends a signal to the driver when approaching the boundary line, whereafter the driver starts himself the raising/lowering.

Figures 2A to 2L will be explained below; in the embodiment proposed, the method of bringing the device from the standby position to the operative position and vice versa comprises that the raising/lowering is manually initiated by the driver. Of course, it is also possible to achieve this in the above-described automatic or semi-automatic manner.

In Figure 2A, the device 1 with functioning circular rakes 12a,b, 13a,b moves, in the first normal work stroke, in the direction W1 and reaches with the front side of the circular rake 12a the boundary line G1. The driver of the tractor 2 operates the button 23 on the operating panel 21 in order to make the control unit 20 to retract the cylinder 16a, so that the circular rake 12a pivots to the standby position, to the situation of Figure 2B. On the basis of the above-mentioned first, second and third data, the control unit has determined the moment when the front side of the circular rake 12b reaches the boundary line G1 and then operates the cylinder 16b to bring the circular rake 12b into the standby position, see Figure 2C.

The control unit 20 acts in the same manner for successively the third circular rake 13a and the fourth circular rake 13b, see Figures 2D and 2E.. The rake device 4 is now functionally free from the ground surface and can move over the headland 102 without disturbing the windrow lying thereon, Figure 2F.

This time sequence is stored by the control unit in a memory, as related to the crossing of G1.

Before starting the next, returning, work stroke, direction W2, the circular rake 12a should again be operated as the first one, for which purpose the driver operates again the button 23 on the operating panel. The control unit 20 is configured to apply in this case the succession of actions previously stored in the memory at the immediately preceding crossing of G1.

The control unit 20 thus makes the cylinder 16a extend again to pivot the pivot arm 14a again downwards, to achieve the situation of Figure 2H, and subsequently the cylinder 16b to bring the circular rake 12b into the operative position, see Figure 21. The control unit 20 acts in the same manner for successively the third circular rake 13a and the fourth circular rake 13b, see Figures 2J and 2K. The rake device 4 is now completely functional for raking the crop during following a path to the headland 103, Figure 2L.

At the boundary line G2 a procedure corresponding to the one at G1 takes places, however on the basis of the angle beta inputted into the control unit. The driver of the tractor 2 operates again the control unit 20 by means of the button 23 in order to make the circular rake 12a raise, in which case the control unit 20 also activates the cylinder 16b to raise the circular rake 12b due to the perpendicular angle between the boundary line G2 and W2. On the basis of the above-mentioned first, second and third data, the control unit determines the moment when the cylinders 17a,b should be activated and acts in accordance therewith. Just like in the case of the first crossing of G1, this time sequence is also stored in a memory in the control as related to the crossing of G2.

In one embodiment, the control unit 20 is configured to record the events of operating the cylinders 16a,b and 17a,b when crossing the boundary lines G1 and G2: raising at G1, lowering at G1, raising at G2 and lowering at G2. When the device, on the main area 101 in the direction W1, arrives again at the boundary line G1, the control unit 20 automatically follows the previously defined and stored (time) sequence for G1, etcetera. If the angle between G2 and W2 is not perpendicular, at G2 a procedure corresponding to that at G1 takes place, taking the specific angle beta into account.

If the speed when entering the headland strongly differs from that when leaving the headland, the driver can suppress the automatic use of the previous (time) sequence, for example by pressing the button 23 quickly twice and subsequently pressing it once. For that crossing, the control unit is then in a mode in which the speed data is defined again and is used for defining the (time) sequence.

The driver can make a comparable intervention also at other moments, for example when the actual speed differs too much from the speed which was stored for the respective boundary line when this boundary line was crossed in the normal first work stroke. The driver can also decide to have the speed, and consequently the second data, defined again at each new crossing.

It may happen that W1 and/or W2 change during operation. In that case, the compass in the GPS system can be utilized, see also the aforementioned angle diagram. The control unit defines the angles between the actual directions of travel W1,2 and the North, compares them with the initially defined angle gamma, and calculates therefrom a correction with respect to the initially inputted values for alpha and beta.

In particular in the case that the angles alpha and/or beta are fairly acute, in a refined embodiment, the control can take the actual transverse distance from the rotor centre lines, in particular R1 and R2, to the longitudinal centre line S into account, by making use of the data from the above-mentioned length meters.

If the boundary lines have lengthwise sections having different angles, the respective angle data can be inputted separately into the control unit. In that case, the operating panel makes it possible for the driver to select the boundary line section in question for the control unit.

In a further embodiment, the driver need not estimate himself the angle alpha between W1 and G1. The tractor is provided with navigation equipment on the basis of GPS, the navigation equipment comprising a lay-out of the field to be worked from which the required angles are known. This embodiment may have an automatic or semi-automatic operation for raising/lowering, in the case of automatic operation no intervention of the driver being required. The control unit observes itself when the boundary line has been approached and starts itself the raising/lowering. In the case of semi-automatic operation, the control again observes itself where when the boundary line has been approached, but then sends a signal to the driver, whereafter the driver can start the raising/lowering. Thanks to the GPS system, the control unit knows in real time what is the direction W1,2 and the speed of the tractor, the second data, so that a fourth data of a reference line is superfluous in this embodiment.

If the haymaking device is not turned over 180 degrees on the headland, but is configured in such a manner that a returning work stroke can be performed by travelling rearwards, it is possible for the control unit to have the stored sequence of raising the tools performed in opposite sense.

The above-mentioned description serves to illustrate the operation of preferred embodiments of the invention.

On the basis of the above-mentioned explanation, it will be obvious for a person skilled in the art that there are many variations possible. The scope of the invention, however, is defined by the appended claims.

## Claims

1. Haymaking device (1), comprising a frame movable in a direction of travel and having at least a first and a second crop processing tool (12a, 12b), in particular a crop displacing tool, in particular a rake tool, which are arranged side to side, and first and second transfer means (16a, 16b) for transferring the first and second crop processing tools (12a, 12b) from an operative position, in which the crop is engaged for displacement thereof, to a standby position, in which the crop is not functionally engaged, and vice versa, respectively, a programmable control unit (20) for the transfer means, **characterized in that** the first and second transfer means (16a, 16b) are capable of being activated independently of each other by the control unit (20), **in that** the control unit is configured to process a first data indicative of an angle (α) between a direction of travel of a work stroke (W1) of the device (1) over a field (100) and at least one boundary line (G1), in particular a starting line or an end line, and wherein the control unit (20) is configured to process a second data indicative of the speed of the device (1) in the direction of travel (W1), wherein the control unit (20) is further configured to activate the first and second transfer means (16a, 16b) one after another in dependence on the first and second data upon arrival at the at least one boundary line (G1).

2. Device (1) according to claim 1, comprising a third crop processing tool (13a), wherein the third crop processing tool (13a) is located behind the first and second crop processing tools (12a, 12b) in the direction of travel (W1), and comprising third transfer means (17a) for transferring the third crop processing tool (13a) from an operative position, in which the crop is engaged for processing thereof, to a standby position, in which the crop is not functionally engaged, and vice versa, wherein the first and second and third transfer means (16a, 16b, 17a) are capable of being activated independently of each other by the control unit (20), wherein the control unit (20) is configured to activate the third transfer means (17a) after the first and/or second transfer means in dependence on the first and second data upon arrival of the device (1) at the at least one boundary line (G1).

3. Device (1) according to claim 2, wherein the third crop processing tool (13a) is of the same kind as the first and second crop processing tools (12a, 12b).

4. Device (1) according to claim 2 or 3, comprising a fourth crop processing tool (13b), wherein the fourth crop processing tool (13b) is located aside the third crop processing tool (13a) and is of the same kind, and comprising fourth transfer means (17b) for transferring the fourth crop processing tool from an operative position, in which the crop is engaged for processing thereof, to a standby position, in which the crop is not functionally engaged, and vice versa, wherein the first, second, third and fourth transfer means (16a, 16b, 17a, 17b) are capable of being activated independently of each other by the control unit (20), wherein the control unit (20) is configured to activate the fourth transfer means after the first and/or second transfer means and before, simultaneously or after the third transfer means in dependence on the first and second data upon arrival of the device (1) at the at least one boundary line (G1).

5. Device according to any one of the preceding claims, wherein the control unit (20) is provided with a memory for storage of third data indicative of a position of the crop processing tools present on the device (1) with respect to a reference point (M), wherein the control unit (20) is configured to activate said transfer means (12a, 12b) also in dependence on the third data.

6. Device (1) according to any one of the preceding claims, wherein the control unit (20) is configured to process a fourth data indicative of the angle (γ) between the direction of travel of a work stroke (W1) of the device (1) over the field (100) and a reference line (N), in particular the North, wherein the control unit (20) is configured to adjust the first data in accordance with a change of the fourth data.

7. Device (1) according to any one of the preceding claims, wherein the control unit (20) is provided with a memory for storage of the first data.

8. Device (1) according to any one of the preceding claims, wherein the device is provided with detection means for obtaining the first data.

9. Device (1) according to any one of the preceding claims, wherein the control unit (20) is configured to activate said transfer means semi-automatically or automatically, also in dependence on the first data.

10. Device (1) according to any one of the preceding claims, wherein the crop processing tools (12a, 12b) are rotatable about respective rotational centre lines (R1, R2), in particular about rotational centre lines which are substantially vertical in the operative position.

11. Device (1) according to claim 10, wherein the crop processing tools (12a, 12b) are designed as so-called circular rakes.

12. Device (1) according to claim 11, wherein the circular rakes are each mounted on their own pivot arm (14a, 14b) which, for example by means of a cylinder, can be pivoted about a substantially horizontal pivot centre line (S1, S2).

13. Device (1) according to claim 10, 11 or 12, wherein the rotational centre lines (R1, R2) of the first and second crop processing tools (12a, 12b) are situated substantially on a line perpendicular to the direction of travel (W1).

14. Device (1) according to any one of claims 10-13, when dependent on claim 4, wherein the rotational centre lines (R3, R4) of the third and fourth crop processing tools (13a, 13b) are situated substantially on a line perpendicular to the direction of travel (W1).

15. Device (1) according to any one of the preceding claims, further provided with measuring means for measuring the distance from the crop processing tools (12a, 12b) to the reference point (M), or a change thereof, which measuring means are in operative connection with the control unit (20) for emitting a respective measuring signal for storage as third data.

## Patentansprüche

1. Heuerntevorrichtung (1), umfassend einen Rahmen, der in eine Fahrrichtung beweglich ist und mindestens ein erstes und ein zweites Ernteverarbeitungswerkzeug (12a, 12b) aufweist, insbesondere eine Ernteverschiebewerkzeug, insbesondere ein Rechenwerkzeug, die Seite an Seite angeordnet sind, und erste und zweite Transfermittel (16a, 16b) zum Übertragen des ersten und zweiten Erntegut-Verarbeitungswerkzeugs (12a, 12b) aus einer Betriebsposition, in der Erntegut zur Verschiebung davon in Eingriff gebracht wird, zu einer Standby-Position, in der das Erntegut nicht in Betriebseingriff gebracht wird, und umgekehrt, eine programmierbare Steuereinheit (20) für das Transfermittel, **dadurch gekennzeichnet, dass** das erste und das zweite Transfermittel (16a, 16b) unabhängig voneinander von der Steuereinheit (20) betätigt werden können, dadurch, dass die Steuereinheit zum Verarbeiten von ersten Daten konfiguriert ist, die einen Winkel (α) zwischen einer Fahrrichtung eines Arbeitstaktes (W1) der Vorrichtung (1) auf einem Feld (100) und mindestens einer Grenzlinie (G1) angibt, insbesondere einer Start- oder Endlinie, wobei die Steuereinheit (20) zum Verarbeiten von zweiten Daten konfiguriert ist, welche die Geschwindigkeit der Vorrichtung (1) in Fahrtrichtung (W1) angibt, wobei die Steuereinheit (20) weiterhin zum European application number 11708344.4 Aktivieren des ersten und des zweiten Transfermittels (16a, 16b) nacheinander in Abhängigkeit von den ersten und zweiten Daten bei Ankommen an der mindestens einen Grenzlinie (G1) konfiguriert ist.

2. Vorrichtung (1) nach Anspruch 1, umfassend ein drittes Erntegut-Verarbeitungswerkzeug (13a), wobei das dritte Erntegut-Verarbeitungswerkzeug (13a) hinter dem ersten und dem zweiten Erntegut-Verarbeitungswerkzeug (12a, 12b) in Fahrtrichtung (W1) angeordnet ist und ein drittes Transfermittel (17a) zum Übertragen des dritten Erntegut-Verarbeitungswerkzeugs (13a) aus einer Betriebsposition, in der das Erntegut zum Verarbeiten davon in Eingriff gebracht wird, zu einer Standby-Position übertragen wird, in der das Erntegut nicht in Betriebseingriff gebracht wird und umgekehrt, wobei das erste und das zweite und das dritte Transfermittel (16a, 16b, 17a) unabhängig voneinander von der Steuereinheit (20) betätigt werden können, wobei die Steuereinheit (20) zum Aktivieren des dritten Transfermittels (17a) konfiguriert ist, nachdem das erste und/oder das zweite Transfermittel in Abhängigkeit von den ersten und zweiten Daten nach Ankommen der Vorrichtung (1) an der mindestens einen Grenzlinie (G1) konfiguriert ist.

3. Vorrichtung (1) nach Anspruch 2, wobei das dritte Erntegut- Verarbeitungswerkzeug (13a) von der gleichen Art wie das erste und das zweite Erntegut-Verarbeitungswerkzeug (12a, 12b) sind.

4. Vorrichtung (1) nach Anspruch 2 oder 3, umfassend ein viertes Erntegut-Verarbeitungswerkzeug (13b), wobei das vierte Erntegut-Verarbeitungswerkzeug (13b) neben dem dritten Erntegut-Verarbeitungswerkzeug (13a) angeordnet ist und der gleichen Art ist und ein viertes Transfermittel (17b) zum Übertragen des vierten Erntegut-Verarbeitungswerkzeugs aus einer Betriebsposition, in der das Erntegut zum Verarbeiten davon in Eingriff gebracht wird, zu einer Standby-Position übertragen wird, in der das Erntegut nicht in Betriebseingriff gebracht wird und umgekehrt, wobei das erste, das zweite, das dritte und das vierte Transfermittel (16a, 16b, 17a, 17b) unabhängig voneinander von der Steuereinheit (20) betätigt werden können, wobei die Steuereinheit (20) zum Betätigen des vierten Transfermittels konfiguriert ist, nachdem das erste und/oder das zweite Transfermittel in Abhängigkeit von den ersten und zweiten Daten nach Ankommen der Vorrichtung (1) an der mindestens einen Grenzlinie (G1) konfiguriert ist.

5. Vorrichtung nach einem der vorhergehenden Ansprüche, wobei die Steuereinheit (20) mit einem Speicher zum Speichern von dritten Daten bereitgestellt ist, der eine Position der Erntegut-Verarbeitungswerkzeuge, die in der Vorrichtung (1) vorhanden sind, in Bezug auf einen Referenzpunkt (M) angibt, wobei die Steuereinheit (20) zum Betätigen des Transfermittels (12a, 12b) auch in Abhängigkeit von den dritten Daten konfiguriert ist.

6. Vorrichtung (1) nach einem der vorhergehenden Ansprüche, wobei die Steuereinheit (20) konfiguriert ist, um vierte Daten, die den Winkel (γ) zwischen der Fahrtrichtung eines Arbeitstaktes (W1) der Vorrichtung (1) über dem Feld (100) und einer Referenzlinie (N) angeben, insbesondere Norden, wobei die Steuereinheit (20) zum Einstellen der ersten Daten gemäß einer Veränderung der vierten Daten konfiguriert ist.

7. Vorrichtung (1) nach einem der vorherigen Ansprüche, wobei die Steuereinheit (20) mit einem Speicher zum Speichern der ersten Daten bereitgestellt ist.

8. Vorrichtung (1) nach einem der vorherigen Ansprüche, wobei die Vorrichtung mit Erfassungsmitteln zum Erhalten der ersten Daten bereitgestellt ist.

9. Vorrichtung (1) nach einem der vorherigen Ansprüche, wobei die Steuereinheit (20) zum halbautomatischen oder automatischen Betätigen des Transfermittels auch in Abhängigkeit von den ersten Daten konfiguriert ist.

10. Vorrichtung (1) nach einem der vorhergehenden Ansprüche, wobei die Erntegut-Verarbeitungswerkzeuge (12a, 12b) um die zugehörigen Drehmittellinien (R1, R2) drehbar sind, insbesondere um die Drehmittelinien, die im Wesentlichen vertikal in Betriebsposition verlaufen.

11. Vorrichtung (1) nach Anspruch 10, wobei die Erntegut-Verarbeitungswerkzeuge (12a, 12b) als so genannte Kreiselrechen ausgestaltet sind.

12. Vorrichtung (1) nach Anspruch 11, wobei die Kreiselrechen jeweils an ihrem eigenen Schwenkarm (14a, 14b) angeordnet sind, der mittels eines Zylinders um eine im Wesentlichen horizontale Schwenkmittellinie (S1, S2) geschwenkt werden kann.

13. Vorrichtung (1) nach Anspruch 10, 11 oder 12, wobei die Drehmittellinien (R1, R2) des ersten und des zweiten Erntegut-Verarbeitungswerkzeugs (12a, 12b) im Wesentlichen auf einer Linie angeordnet sind, die im Wesentlichen senkrecht zur Fahrtrichtung (W1) verläuft.

14. Vorrichtung (1) nach einem der Ansprüche 10 bis 13, wenn abhängig von Anspruch 4, wobei die Drehmittellinien (R3, R4) des dritten und vierten Erntegut-Verarbeitungswerkzeugs (13a, 13b) im Wesentlichen auf einer Linie angeordnet sind, die senkrecht zur Fahrtrichtung (W1) verläuft.

15. Vorrichtung (1) nach einem der vorhergehenden Ansprüche, die weiterhin mit Messmitteln zum Messen des Abstands von den Erntegut-Verarbeitungswerkzeugen (12a, 12b) und dem Referenzpunkt (M) oder einer Änderung davon bereitgestellt sind, wobei die Messmittel in Betriebsverbindung mit der Steuereinheit (20) zum Ausgeben eines zugehörigen Messsignals zum Speichern als dritte Daten stehen.

## Revendications

1. Dispositif (1) de fenaison, comportant un châssis mobile dans une direction d'avance et doté d'au moins un premier et un deuxième outil (12a, 12b) de traitement de récolte, en particulier un outil de déplacement de récolte, en particulier un outil râteau, qui sont disposés côte à côte, et de premier et deuxième moyens (16a, 16b) de transfert servant à transférer les premier et deuxième outils (12a, 12b) de traitement de récolte d'une position fonctionnelle, dans laquelle la récolte est soumise à une action en vue de son déplacement, à une position d'attente, dans laquelle la récolte n'est pas soumise à une action fonctionnelle, et vice versa, respectivement, une unité (20) de commande programmable destinée aux moyens de transfert, **caractérisé en ce que** les premier et deuxième moyens (16a, 16b) de transfert sont susceptibles d'être activés indépendamment l'un de l'autre par l'unité (20) de commande, **en ce que** l'unité de commande est configurée pour traiter une première donnée indicative d'un angle (α) entre une direction d'avance d'une course (W1) de travail du dispositif (1) sur un champ (100) et au moins une ligne (G1) de délimitation, en particulier une ligne de début ou une ligne de fin, et l'unité (20) de commande étant configurée pour traiter une deuxième donnée indicative de la vitesse du dispositif (1) dans la direction (W1) d'avance, l'unité (20) de commande étant en outre configurée pour activer les premier et deuxième moyens (16a, 16b) de transfert l'un après l'autre en fonction des première et deuxième données suite à l'arrivée à la ligne ou aux lignes (G1) de délimitation.

2. Dispositif (1) selon la revendication 1, comportant un troisième outil (13a) de traitement de récolte, le troisième outil (13a) de traitement de récolte étant situé derrière les premier et deuxième outils (12a, 12b) de traitement de récolte dans la direction (W1) d'avance, et comportant des troisièmes moyens (17a) de transfert servant à transférer le troisième outil (13a) de traitement de récolte d'une position fonctionnelle, dans laquelle la récolte est soumise à une action en vue de son traitement, à une position d'attente, dans laquelle la récolte n'est pas soumise à une action fonctionnelle, et vice versa, les premier et deuxième et les troisièmes moyens de transfert (16a, 16b, 17a) étant susceptibles d'être activés indépendamment l'un de l'autre par l'unité (20) de commande, l'unité (20) de commande étant configurée pour activer les troisièmes moyens (17a) de transfert après les premier et/ou deuxième moyens de transfert en fonction des première et deuxième données suite à l'arrivée du dispositif (1) à la ligne ou aux lignes (G1) de délimitation.

3. Dispositif (1) selon la revendication 2, le troisième outil (13a) de traitement de récolte étant du même type que les premier et deuxième outils (12a, 12b) de traitement de récolte.

4. Dispositif (1) selon la revendication 2 ou 3, comportant un quatrième outil (13b) de traitement de récolte, le quatrième outil (13b) de traitement de récolte étant situé à côté du troisième outil (13a) de traitement de récolte et étant du même type, et comportant des quatrièmes moyens (17b) de transfert servant à transférer le quatrième outil de traitement de récolte d'une position fonctionnelle, dans laquelle la récolte est soumise à une action en vue de son traitement, à une position d'attente, dans laquelle la récolte n'est pas soumise à une action fonctionnelle, et vice versa, les premier, deuxième, troisième et quatrième moyens (16a, 16b, 17a, 17b) de transfert étant susceptibles d'être activés indépendamment l'un de l'autre par l'unité (20) de commande, l'unité (20) de commande étant configurée pour activer les quatrièmes moyens de transfert après les premier et/ou deuxième moyens de transfert et avant, simultanément ou après les troisièmes moyens de transfert en fonction des première et deuxième données suite à l'arrivée du dispositif (1) à la ligne ou aux lignes (G1) de délimitation.

5. Dispositif selon l'une quelconque des revendications précédentes, l'unité (20) de commande étant munie d'une mémoire servant au stockage de troisièmes données indicatives d'une position des outils de traitement de récolte présents sur le dispositif (1) par rapport à un point (M) de référence, l'unité (20) de commande étant configurée pour activer lesdits moyens (12a, 12b) de transfert également en fonction des troisièmes données.

6. Dispositif (1) selon l'une quelconque des revendications précédentes, l'unité (20) de commande étant configurée pour traiter une quatrième donnée indicative de l'angle (γ) entre la direction d'avance d'une course (W1) de travail du dispositif (1) sur le champ (100) et une ligne (N) de référence, en particulier le Nord, l'unité (20) de commande étant configurée pour adapter la première donnée en fonction d'une variation de la quatrième donnée.

7. Dispositif (1) selon l'une quelconque des revendications précédentes, l'unité (20) de commande étant munie d'une mémoire servant au stockage de la première donnée.

8. Dispositif (1) selon l'une quelconque des revendications précédentes, le dispositif étant muni de moyens de détection servant à obtenir la première donnée.

9. Dispositif (1) selon l'une quelconque des revendications précédentes, l'unité (20) de commande étant configurée pour activer lesdits moyens de transfert semi-automatiquement ou automatiquement, également en fonction de la première donnée.

10. Dispositif (1) selon l'une quelconque des revendications précédentes, les outils (12a, 12b) de traitement de récolte pouvant tourner autour de lignes médianes respectives (R1, R2) de rotation, en particulier autour de lignes médianes de rotation qui sont sensiblement verticales dans la position fonctionnelle.

11. Dispositif (1) selon la revendication 10, les outils (12a, 12b) de traitement de récolte étant conçus comme des râteaux dits circulaires.

12. Dispositif (1) selon la revendication 11, chacun des râteaux circulaires étant monté sur son propre bras pivotant (14a, 14b) qui, par exemple au moyen d'un vérin, peuvent être pivotés autour d'une ligne médiane (S1, S2) de pivotement sensiblement horizontale.

13. Dispositif (1) selon la revendication 10, 11 ou 12, les lignes médianes (R1, R2) de rotation des premier et deuxième outils (12a, 12b) de traitement de récolte étant situées sensiblement sur une ligne perpendiculaire à la direction (W1) d'avance.

14. Dispositif (1) selon l'une quelconque des revendications 10 à 13 lorsqu'elles sont dépendantes de la revendication 4, les lignes médianes (R3, R4) de rotation des troisième et quatrième outils (13a, 13b) de traitement de récolte étant situées sensiblement sur une ligne perpendiculaire à la direction (W1) d'avance.

15. Dispositif (1) selon l'une quelconque des revendications précédentes, muni en outre de moyens de mesure servant à mesurer la distance des outils (12a, 12b) de traitement de récolte au point (M) de référence, ou une variation de celle-ci, lesdits moyens de mesure étant en liaison fonctionnelle avec l'unité (20) de commande pour émettre un signal respectif de mesure en vue de son stockage en tant que troisièmes données.
